# EUROPEAN PATENT APPLICATION

(11) **EP 3 176 727 A1**
(43) Date of publication of application: **07.06.2017**
(21) Application number: 16199522.0
(22) Date of filing: 18.11.2016
(51) Int. Cl.: G06K 9/00, G06K 9/62

(54) **IMAGE CLASSIFICATION METHOD AND DEVICE**

(30) Priority: 27.11.2015 CN 201510846109
(71) Applicant: Xiaomi Inc., Beijing 100085 (CN)
(72) Inventor: ZHANG, Tao, Haidian District, Beijing 100085 (CN); LONG, Fei, Haidian District, Beijing 100085 (CN); CHEN, Zhijun, Haidian District, Beijing 100085 (CN)
(74) Representative: Delumeau, François Guy

(57) **Abstract**

The present disclosure relates to an image classification method and device, which are applied in a terminal, the method includes: when acquiring two images to be classified containing face feature information, determining (S110) face pose information in the two images to be classified respectively according to a pre-established face pose classifier model; determining (S120) a target cluster merging threshold value between the two images to be classified according to the face pose information in the two images to be classified; and classifying (S130) the two images to be classified by using the determined target cluster merging threshold value. By determining the face pose information, whether the two images to be classified belong to the same type of images can be accurately determined, thereby improving efficiency of image classification.

## Description

### TECHNICAL FIELD

The present disclosure generally relates to the technical field of image identification, and more particularly, to an image classification method and an image classification device.

### BACKGROUND

With continuous development of science, smart terminals as represented by smart phones may implement more and more functions. Taking the smart phone as an example, a user may utilize the smart phone to take a photo of himself/herself or others, and may also download photos in his/her space or others' space to a local device for storage.

However, with an increase of storage space of the smart phone, the photos stored in the smart phone by the user are more and more. The management of such photos becomes very tedious. In many cases, the user hopes to cluster the photos of the same person together for displaying, so as to facilitate browsing by the user.

### SUMMARY

In order to solve the problems existing in the related art, the present disclosure provides an image classification method and an image classification device.

According to a first aspect of embodiments of the present disclosure, there is provided an image classification method, including:
when acquiring two images to be classified containing face feature information, determining face pose information in the two images to be classified respectively according to a pre-established face pose classifier model;
determining a target cluster merging threshold value between the two images to be classified according to the face pose information in the two images to be classified; and
classifying the two images to be classified by using the determined target cluster merging threshold value.

In the image classification method provided by the embodiments of the present disclosure, when classifying two images to be classified, the face pose information of the two images to be classified are determined respectively according to the pre-established face pose classifier model, then the target cluster merging threshold value between the two images to be classified is determined, and then the two images to be classified are classified according to the target cluster merging threshold value. By determining the face pose information, whether the two images to be classified belong to the same type of images can be determined more accurately, and the image classification efficiency can be improved further.

Optionally, the method may further include:
calculating a similarity between the two images to be classified;
determining whether the similarity is greater than a preset threshold value; and
when the similarity is greater than the preset threshold value, performing the step of determining the face pose information in the two images to be classified respectively.

When classifying two images having a certain similarity, i.e., when it is unable to judge, based on similarity alone, whether the two images belong to the same type of images, the embodiments provided by the present disclosure may further improve the accuracy of the classification of the two images to be classified. If the similarity of the two images to be classified is smaller than a certain similarity, i.e., when it is determined that the two images to be classified are obviously not the same type of images, it is unnecessary to adopt the method provided by the present disclosure. Thereby, when the similarity between the two images to be classified is at least within a certain similarity range, the present disclosure is applicable.

Optionally, the determining of the target cluster merging threshold value between the two images to be classified may include:
acquiring a preset cluster merging threshold value;
determining whether the face pose information in the two images to be classified are both pose information of wide-angle; and
when the face pose information in the two images to be classified are both the pose information of wide-angle, increasing the preset cluster merging threshold value according to a preset manner, and using the increased preset cluster merging threshold value as the target cluster merging threshold value.

If the face pose information in the two images to be classified are the pose information of wide-angle, it indicates that the two images to be classified contain rich face features, and it is necessary to increase the cluster merging threshold value therebetween so as to improve the accuracy of classification.

Optionally, the determining of the target cluster merging threshold value between the two images to be classified may include:
acquiring a preset cluster merging threshold value;
determining whether the face pose information in the two images to be classified are pose information of different angles respectively; and
when the face pose information in the two images to be classified are the pose information of different angles respectively, decreasing the preset cluster merging threshold value according to a preset manner, and using the decreased preset cluster merging threshold value as the target cluster merging threshold value.

If the face pose information in the two images to be classified are the pose information of different angles, it indicates that face features in the two images to be classified are not rich, and it is necessary to decrease the cluster merging threshold value therebetween so as to improve the accuracy of classification.

Optionally, the determining of the target cluster merging threshold value between the two images to be classified may include:
acquiring a preset cluster merging threshold value;
determining whether the face pose information in the two images to be classified are pose information of front face; and
when the face pose information in the two images to be classified are the pose information of front face, using the preset cluster merging threshold value as the target cluster merging threshold value.

If the face pose information in the two images to be classified are the pose information of front face, it indicates that the two images to be classified contain all the face features, and at this time, the preset cluster merging threshold value may be directly used as the target cluster merging threshold value.

Optionally, the classifying of the two images to be classified by using the determined target cluster merging threshold value may include:
calculating a cluster merging value of the two images to be classified;
determining whether the cluster merging value is greater than the target cluster merging threshold value;
when the cluster merging value is greater than the target cluster merging threshold value, determining the two images to be classified as images of the same type; and
when the cluster merging value is not greater than the target cluster merging threshold value, determining the two images to be classified as images of different types.

By comparing the cluster merging value of the two images to be classified with the target cluster merging threshold value, it is possible to conveniently and accurately determine whether the two images to be classified belong to the same type of images.

According to a second aspect of embodiments of the present disclosure, there is provided an image classification device, including:
a face pose information determining module configured to, when acquiring two images to be classified containing face feature information, determine face pose information in the two images to be classified respectively according to a pre-established face pose classifier model;
a target cluster merging threshold value determining module configured to determine a target cluster merging threshold value between the two images to be classified according to the face pose information in the two images to be classified; and
an image classification module configured to classify the two images to be classified by using the determined target cluster merging threshold value.

Optionally, the device may further include:
a similarity calculating module configured to calculate a similarity between the two images to be classified; and
a threshold value determining module configured to determine whether the similarity is greater than a preset threshold value.

Optionally, the target cluster merging threshold value determining module may include:
a first cluster merging threshold value acquiring submodule configured to acquire a preset cluster merging threshold value;
a wide-angle pose information determining submodule configured to determine whether the face pose information in the two images to be classified are both pose information of wide-angle; and
a first target cluster merging threshold value submodule configured to, when the face pose information in the two images to be classified are both the pose information of wide-angle, increase the preset cluster merging threshold value according to a preset manner, and use the increased preset cluster merging threshold value as the target cluster merging threshold value.

Optionally, the target cluster merging threshold value determining module may include:
a second cluster merging threshold value acquiring submodule configured to acquire a preset cluster merging threshold value;
a different-angle pose information determining submodule configured to determine whether the face pose information in the two images to be classified are pose information of different angles respectively; and
a second target cluster merging threshold value submodule configured to, when the face pose information in the two images to be classified are the pose information of different angles respectively, decrease the preset cluster merging threshold value according to a preset manner, and use the decreased preset cluster merging threshold value as the target cluster merging threshold value.

Optionally, the target cluster merging threshold value determining module may include:
a third cluster merging threshold value acquiring submodule configured to acquire a preset cluster merging threshold value;
a front-face pose information determining submodule configured to determine whether the face pose information in the two images to be classified are pose information of front face; and
a third target cluster merging threshold value submodule configured to, when the face pose information in the two images to be classified are the pose information of front face, use the preset cluster merging threshold value as the target cluster merging threshold value.

Optionally, the image classification module may include:
a cluster merging value calculating submodule configured to calculate a cluster merging value of the two images to be classified;
a cluster merging value determining submodule configured to determine whether the cluster merging value is greater than the target cluster merging threshold value;
a same-type image determining submodule configured to, when the cluster merging value is greater than the target cluster merging threshold value, determine the two images to be classified as images of the same type; and
a different-type image determining submodule configured to, when the cluster merging value is not greater than the target cluster merging threshold value, determine the two images to be classified as images of different types.

According to a third aspect of embodiments of the present disclosure, there is provided a terminal, including:
a processor; and
a memory for storing instructions executable by the processor;
wherein the processor is configured to:
   when acquiring two images to be classified containing face feature information, determine face pose information in the two images to be classified respectively according to a pre-established face pose classifier model;
   determine a target cluster merging threshold value between the two images to be classified according to the face pose information in the two images to be classified; and
   classify the two images to be classified by using the determined target cluster merging threshold value.

The present invention also provides a computer program, which when executing on a processor of a terminal, performs the above method.

The technical solutions provided by embodiments of the present disclosure may have the following beneficial effects.

In the image classification method and device provided by the embodiments of the present disclosure, when classifying two images to be classified, the face pose information of the two images to be classified are determined respectively according to the pre-established face pose classifier model, then the target cluster merging threshold value between the two images to be classified is determined, and then the two images to be classified are classified according to the target cluster merging threshold value. By determining the face pose information, whether the two images to be classified belong to the same type of images can be determined more accurately, and the image classification efficiency can be improved further.

It is to be understood that both the foregoing general description and the following detailed description are illustrative and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of an image classification method according to an example embodiment;
Fig. 2 is a flow chart of an image classification method according to another example embodiment;
Fig. 3 is a flow chart of an example implementation of step S120 in Fig. 1;
Fig. 4 is a flow chart of another example implementation of step S120 in Fig. 1;
Fig. 5 is a flow chart of yet another example implementation of step S120 in Fig. 1;
Fig. 6 is a flow chart of an example implementation of step S130 in Fig. 1;
Fig. 7 is a schematic diagram of an image classification device according to an example embodiment;
Fig. 8 is a schematic diagram of an image classification device according to another example embodiment;
Fig. 9 is a schematic diagram of an example implementation of a target cluster merging threshold value determining module in Fig. 7;
Fig. 10 is a schematic diagram of another example implementation of the target cluster merging threshold value determining module in Fig. 7;
Fig. 11 is a schematic diagram of yet another example implementation of the target cluster merging threshold value determining module in Fig. 7;
Fig. 12 is a schematic diagram of an example implementation of an image classification module in Fig. 7; and
Fig. 13 is a block diagram of a terminal according to an exemplary embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

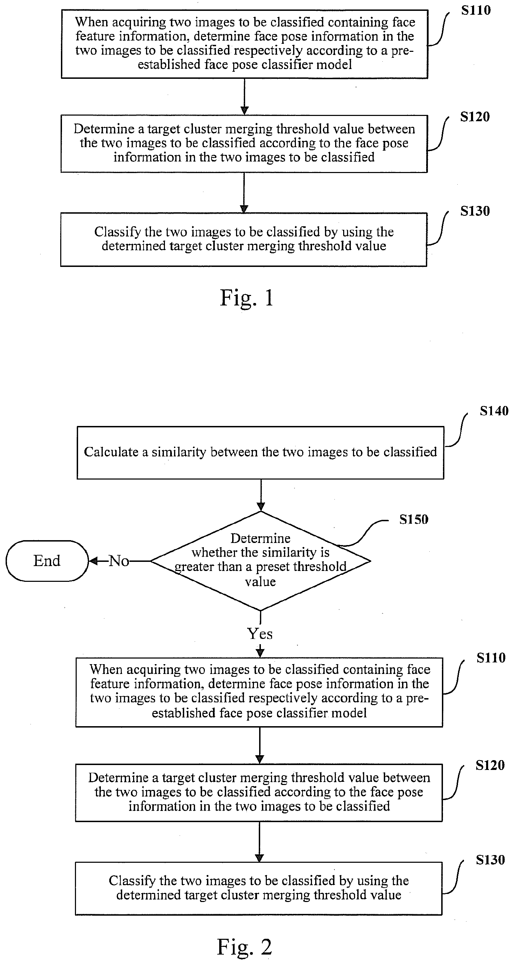

In order to solve relevant problems in the related art, the embodiments of the present disclosure provide an image classification method. As shown in Fig. 1, the method may include the following steps.

In step S110, when acquiring two images to be classified, both of them containing face feature information, face pose information in the two images to be classified are determined respectively according to a pre-established face pose classifier model.

In the embodiment of the present disclosure, the face pose information in the two images to be classified may be determined by pre-establishing a face pose classifier model. For example, a face pose classifier model may be established which allows the face pose information to specify that the face pose in an image corresponds to a front face (i.e. a face seen front on), a side face (i.e. a face seen sideways on, a left face (i.e. the left-hand side of a face), a right face (i.e. the right-hand side of a face), or two front faces. Of course, the selection of face poses defined by a face pose classifier model may be different from the list in the foregoing example (i.e. different poses may be defined, a greater or lesser number of face poses may be defined, etc.).

In step S120, a target cluster merging threshold value between the two images to be classified is determined according to the face pose information in the two images to be classified.

In the embodiments of the present disclosure, after determining the face pose information in the two images to be classified respectively according to the pre-established face pose classifier model, the target cluster merging threshold value corresponding to the face pose information should be acquired according to the face pose information. In addition, when classifying image photos with a plurality of faces, any two of the image photos may be identified at first to determine whether they are photos of a same person, and then a final classifying result of the image photos with a plurality of faces may be obtained. Alternatively, any one of the image photos may be selected at first, then the selected image photo is compared with other image photos one by one to obtain the classifying results of this image photo compared with other image photos, and then the classifying results of the remained other image photos may be determined in a same way.

An image photo may be classified as front face pose information or side face pose information with other angles. Thus, for example, two image photos may be two front face image photos, or one front face image photo and one side face image photo, or two side face image photos, or the like. Each type of combination may have a corresponding cluster merging threshold value. The side face pose information may include side face pose information with different angles. According to the face pose information in the two images to be classified, the cluster merging threshold value between the two images to be classified may be determined via looking up in a look-up table or by automatic generation, and be used as the target cluster merging threshold value.

In step S130, the two images to be classified are classified by using the determined target cluster merging threshold value.

In the embodiments of the present disclosure, the two images to be classified having a similarity greater than the preset threshold value are judged again, thus the accuracy of the classification is further improved. Thereby, when the cluster merging value of the two images to be classified is greater than the target cluster merging threshold value, it indicates that the two images to be classified belong to the same type; otherwise, they do not belong to the same type.

In the image classification method provided by the embodiments of the present disclosure, when classifying the two images to be classified, the face pose information of the two images to be classified are determined respectively according to the pre-established face pose classifier model, then the target cluster merging threshold value between the two images to be classified is determined, and then the two images to be classified are classified according to the target cluster merging threshold value. By determining the face pose information, whether the two images to be classified belong to the same type of images can be determined more accurately, and the image classification efficiency can be improved further.

As a refining of the method in Fig. 1, in another embodiment, as shown in Fig. 2, the method may further include the following steps.

In step S140, a similarity between the two images to be classified is calculated.

In step S150, whether the similarity is greater than a preset threshold value is determined.

When the similarity is greater than the preset threshold value, step S110 is performed.

When the similarity is not greater than the preset threshold value, the process ends.

The Fig.2 embodiment of the present disclosure is mainly used to classify two images having a certain similarity, i.e., when it is unable to judge whether the two images belong to the same type of images only via the similarity, the embodiments provided by the present disclosure may further improve the accuracy of the classification of the two images to be classified. If the similarity of the two images to be classified is smaller than a certain similarity, i.e., when it is determined that the two images to be classified are obviously not the same type of images, it is unnecessary to adopt the method provided by the present disclosure. Thereby, when the similarity between the two images to be classified is at least within a certain similarity range, the present disclosure is applicable.

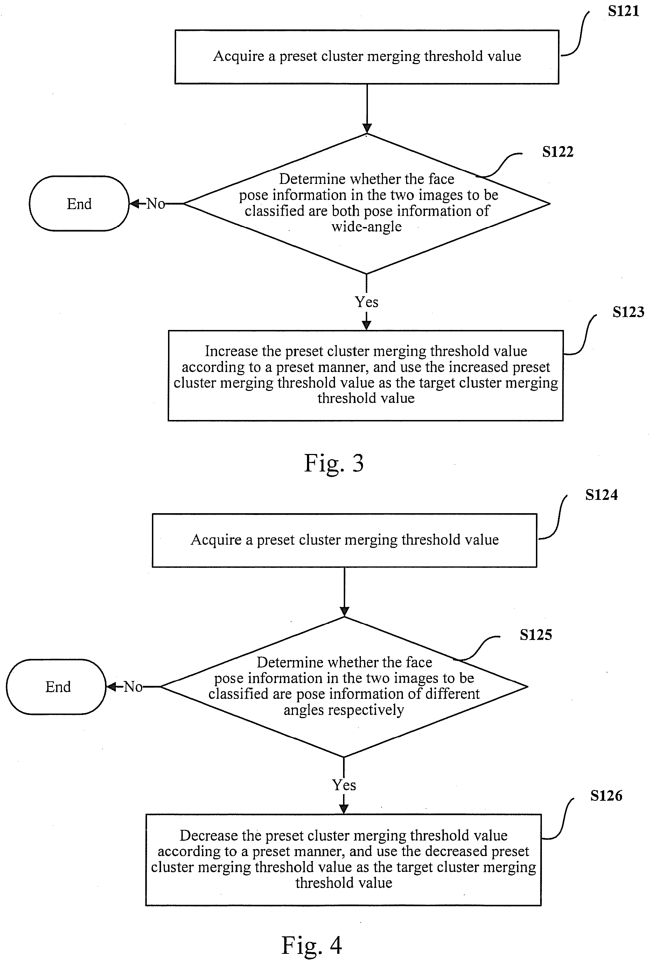

In order to determine the cluster merging threshold value when both the face pose information in the two images to be classified are pose information of wide-angle, and then perform the classification according to the cluster merging threshold value, as a refining of the method shown in Fig. 1, in another embodiment, as shown in Fig. 3, step S120 may further include the following steps.

In step S121, a preset cluster merging threshold value is acquired.

In step S122, it is determined whether the face pose information in the two images to be classified are both pose information of wide-angle.

When the face pose information in the two images to be classified are the pose information of wide-angle then, in step S123, the preset cluster merging threshold value is increased according to a preset manner, and the increased preset cluster merging threshold value is used as the target cluster merging threshold value.

If the face pose information in the two images to be classified are the pose information of wide-angle, it indicates that the two images to be classified contain rich face features, and it is necessary to increase the cluster merging threshold value therebetween so as to improve the accuracy of classification.

In order to determine the cluster merging threshold value when the face pose information in the two images to be classified are respectively pose information of different angles, and then perform the classification according to the cluster merging threshold value, as another refining of the method in Fig. 1, in another embodiment, as shown in Fig. 4, step S120 may further include the following steps.

In step S124, a preset cluster merging threshold value is acquired.

In step S125, it is determined whether the face pose information in the two images to be classified are pose information of different angles respectively.

When the face pose information in the two images to be classified are the pose information of different angles respectively, in step S126, the preset cluster merging threshold value is decreased according to a preset manner, and the decreased preset cluster merging threshold value is used as the target cluster merging threshold value.

If the face pose information in the two images to be classified are the pose information of different angles, it indicates that face features in the two images to be classified are not rich, and it is necessary to decrease the cluster merging threshold value therebetween so as to improve the accuracy of classification.

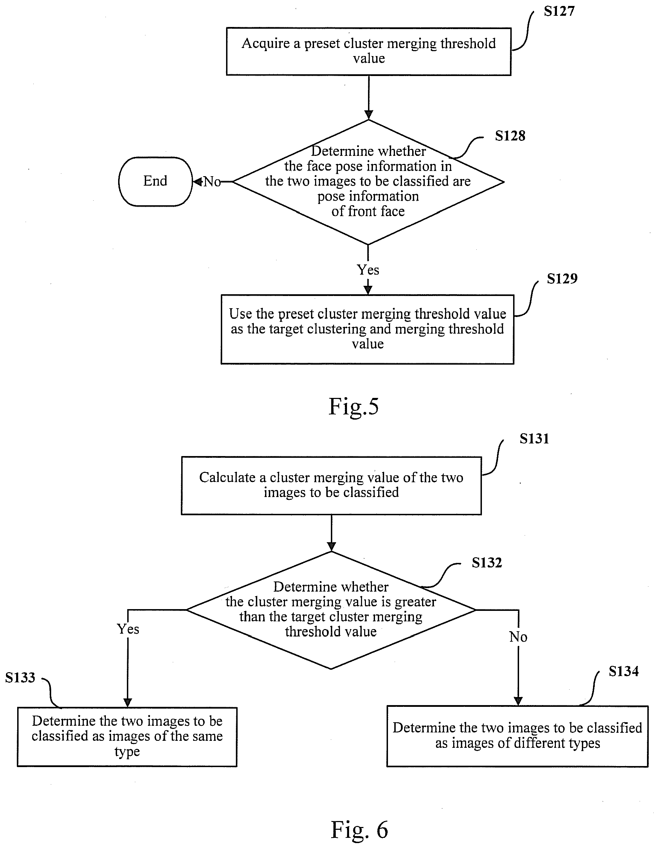

In order to determine the cluster merging threshold value when both face pose information in the two images to be classified are pose information of front face, and then perform the classification according to the cluster merging threshold value, as another refining of the method in Fig. 1, in another embodiment, as shown in Fig. 5, step S120 may further include the following steps.

In step S127, a preset cluster merging threshold value is acquired.

In step S128, it is determined whether the face pose information in the two images to be classified are pose information of front face.

When the face pose information in the two images to be classified are the pose information of front face, in step S129, the preset cluster merging threshold value is used as the target cluster merging threshold value.

If the face pose information in the two images to be classified are the pose information of front face, it indicates that the two images to be classified contain all the face features, and at this time, the preset cluster merging threshold value may be directly used as the target cluster merging threshold value.

Hereinafter, detailed explanations will be given to the above-mentioned three types of face pose information, i.e., both the face pose information in the two images to be classified are the pose information of wide-angle, the face pose information in the two images to be classified are the pose information of different angles, and both the face pose information in the two images to be classified are the pose information of front face.

In order to judge the face pose information in the images to be classified, such as whether the face in the image to be classified is a front face, or is a side face appeared in a certain angle, it is necessary to extract face feature information from the image to be classified, and determine the face pose information in the image to be classified by the face feature information. For example, a three-dimensional system of coordinates along a horizontal direction, a vertical direction and a perpendicular direction may be established for the front face, and the feature information, such as eyes, a nose, and ears in the image is extracted to determine the face pose of the image to be classified.

The extraction of the face feature information in the image to be classified is performed by pre-establishing a face pose classifier model and then determining the face pose information in the image to be classified, such as the face in the image is towards a certain direction with a deviation, for example, the face pose information in the image to be classified is leaning 20 degrees to the left.

In particular, a face pose sample library may be established by collecting various face pose sample image photos, wherein the face pose sample library may include a multiple of photo images of various face poses. For example, the face pose sample library may include 1000 instances of front face pose photo images, 1000 instances of 10-degree face pose photo images, 1000 instances of 20-degree face pose photo images, and the like. Illustratively, 10-degree face pose photo image may mean an included angle between the front face and the camera lens during capturing is 10 degree. The number of angles and photos may be set according to actual needs. In order to improve the accuracy of determination to the face poses by the face pose classifier model, the face photos included in the face pose sample library may include photo images of men and women. For another example, the face photos included in the face pose sample library may include photo images of eldery people, children, and the like.

After completion of the face pose sample library, the photo images in the established face pose sample library may be trained by existing classifiers so as to obtain the face pose classifier model. For example, the photo images in the face pose sample library may be trained by using a non-linear classifier so as to obtain the face pose classifier model. Illustratively, the photo images in the face pose sample library may be trained by using SVM (Support Vector Machine) or CNN (convolutional neural networks) so as to obtain the face pose classifier model.

As a refining of the method in Fig. 1, in another embodiment, as shown in Fig. 6, the step S130 may further include the following steps.

In step S131, a cluster merging value of the two images to be classified is calculated.

In step S132, it is determined whether the cluster merging value is greater than the target cluster merging threshold value.

When the cluster merging value is greater than the target cluster merging threshold value, in step S133, the two images to be classified are used as images of a same type.

When the cluster merging value is not greater than the target cluster merging threshold value, in step S134, the two images to be classified are used as images of different types.

By comparing the cluster merging value of the two images to be classified with the target cluster merging threshold value, it is possible to conveniently and accurately determine whether the two images to be classified belong to the same type of images.

In the image classification method provided by the embodiments of the present disclosure, when classifying the two images to be classified, the face pose information in the two images to be classified are respectively determined according to the pre-established face pose classifier model, then a target cluster merging threshold value between the two images to be classified is determined, and then the two images to be classified are classified according to the target cluster merging threshold value. By determining the face pose information, it is able to determine whether the two images to be classified belong to the same type of images more accurately, and thereby improving the image classifying efficiency.

By the above depiction of the method embodiments, those skilled in the art can clearly understand that the present disclosure may be implemented by using software with necessary general hardware platform, and may also be implemented by hardware. In many cases, the former is a preferable embodiment. Based on such understanding, the essence or the portion contributing over the prior art and providing the technical solution of the present disclosure may be embodied in the form of a software product. The computer software product is stored in a storage medium, including several instructions for making a computer device (which may be a personal computer, a server, a network device, or the like) perform all or part of the steps in the methods described in respective embodiments of the present disclosure. The above described storage medium may be any of various media which may store program codes, such as a read-only memory (ROM), a random-access memory (RAM), a magnetic or optical disk.

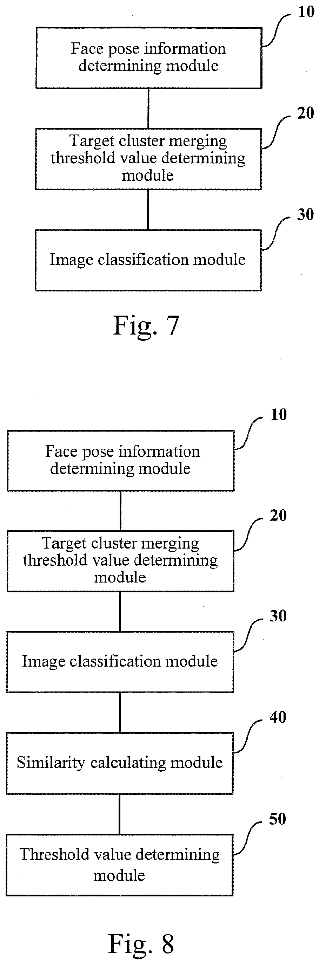

In addition, as an implementation of the above-mentioned respective embodiments, the embodiments of the present disclosure also provide an image classification device located in a terminal. As shown in Fig. 7, the device includes: a face pose information determining module 10, a target cluster merging threshold value determining module 20, and an image classification module 30.

The face pose information determining module 10 is configured to, when acquiring two images to be classified, both of them containing face feature information, determine face pose information in the two images to be classified respectively according to a pre-established face pose classifier model.

In the embodiments of the present disclosure, the face pose information in the two images to be classified may be determined according to the pre-established face pose classifier model, such as a front face, a side face, a left face, a right face, or two front face images.

The target cluster merging threshold value determining module 20 is configured to determine a target cluster merging threshold value between the two images to be classified according to the face pose information in the two images to be classified.

In the embodiments of the present disclosure, after determining the face pose information in the two images to be classified respectively according to the pre-established face pose classifier model, a target cluster merging threshold value corresponding to the face pose information should be acquired according to the face pose information. In addition, when classifying image photos with a plurality of faces, any two of the image photos may be identified at first to determine whether they are photos of a same person, and then a final classifying result of the image photos with a plurality of faces may be obtained. Also, any one of the image photos may be selected at first, then the selected image photo is compared with other image photos one by one to obtain the classifying results of this image photo compared with other image photos, and then the classifying results of the remained other image photos may be determined in a same way.

One image photo may be front face pose information or side face pose information with other angles. For example, two image photos may be two front face image photos, or one front face image photo and one side face image photo, or two side face image photos, or the like. Each combination may have a corresponding cluster merging threshold value. The side face pose information may include side face pose information with different angles. According to the face pose information in the two images to be classified, the cluster merging threshold value between the two images to be classified may be determined via looking up in a look-up table or by an automatic generation, and is used as the target cluster merging threshold value.

The image classification module 30 is configured to classify the two images to be classified by using the determined target cluster merging threshold value.

In the embodiments of the present disclosure, the two images to be classified having a similarity greater than the preset threshold value may be judged again, thus the accuracy of the classification is further improved. Thereby, when the cluster merging value of the two images to be classified is greater than the target cluster merging threshold value, it indicates that the two images to be classified belong to the same type; otherwise, they do not belong to the same type.

In the image classification device provided by the embodiments of the present disclosure, when classifying two images to be classified, the face pose information of the two images to be classified are determined respectively according to the pre-established face pose classifier model, then the target cluster merging threshold value between the two images to be classified is determined, and then the two images to be classified are classified according to the target cluster merging threshold value. By determining the face pose information, whether the two images to be classified belong to the same type of images can be determined more accurately, and the image classification efficiency can be improved further.

In another embodiment provided by the present disclosure, based on Fig. 7, as shown in Fig. 8, the device further includes a similarity calculating module 40 and a threshold value determining module 50.

The similarity calculating module 40 is configured to calculate a similarity between the two images to be classified.

The threshold value determining module 50 is configured to determine whether the similarity is greater than a preset threshold value.

The Fig.8 embodiment of the present disclosure is mainly used to classify two images having a certain similarity, i.e., when it is unable to determine whether the two images belong to the same type of images only via the similarity, the embodiments provided by the present disclosure may further improve the accuracy of the classification of the two images to be classified. If the similarity of the two images to be classified is smaller than a certain similarity, i.e., when it is determined that the two images to be classified are obviously not the same type of images, it is unnecessary to adopt the method provided by the present disclosure. Thereby, when the similarity between the two images to be classified is at least within a certain similarity range, the present disclosure is applicable.

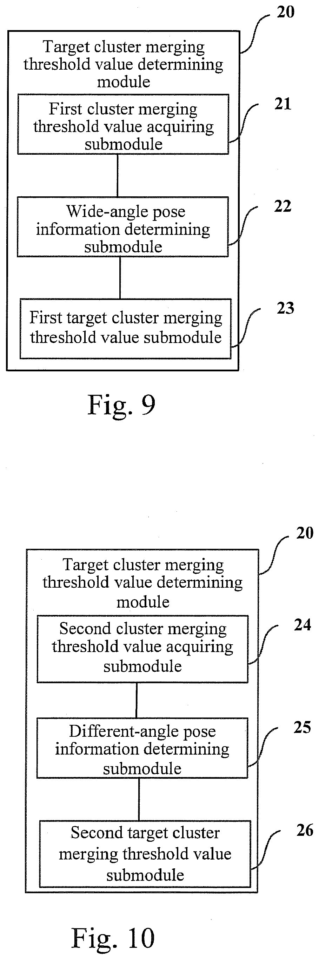

In another embodiment provided by the present disclosure, based on Fig. 7, as shown in Fig. 9, the target cluster merging threshold value determining module 20 includes: a first cluster merging threshold value acquiring submodule 21, a wide-angle pose information determining submodule 22, and a first target cluster merging threshold value submodule 23.

The first cluster merging threshold value acquiring submodule 21 is configured to acquire a preset cluster merging threshold value.

The wide-angle pose information determining submodule 22 is configured to determine whether the face pose information in the two images to be classified are both pose information of wide-angle.

The first target cluster merging threshold value submodule 23 is configured to, when the face pose information in the two images to be classified are both the pose information of wide-angle, increase the preset cluster merging threshold value according to a preset manner, and use the increased preset cluster merging threshold value as the target cluster merging threshold value.

If the face pose information in the two images to be classified are the pose information of wide-angle, it indicates that the two images to be classified contain rich face features, and it is necessary to increase the cluster merging threshold value therebetween so as to improve the accuracy of classification.

In another embodiment provided by the present disclosure, based on Fig. 7, as shown in Fig. 10, the target cluster merging threshold value determining module 20 includes: a second cluster merging threshold value acquiring submodule 24, a different-angle pose information determining submodule 25, and a second target cluster merging threshold value submodule 26.

The second cluster merging threshold value acquiring submodule 24 is configured to acquire a preset cluster merging threshold value.

The different-angle pose information determining submodule 25 is configured to determine whether the face pose information in the two images to be classified are pose information of different angles respectively.

The second target cluster merging threshold value submodule 26 is configured to, when the face pose information in the two images to be classified are the pose information of different angles, decrease the preset cluster merging threshold value according to a preset manner, and use the decreased preset cluster merging threshold value as the target cluster merging threshold value.

If the face pose information in the two images to be classified are the pose information of different angles, it indicates that face features in the two images to be classified are not rich, and it is necessary to decrease the cluster merging threshold value therebetween so as to improve the accuracy of classification.

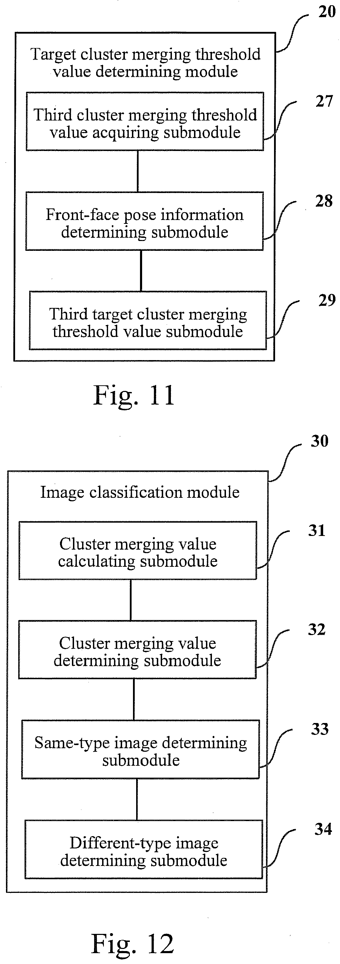

In another embodiment provided by the present disclosure, based on Fig. 7, as shown in Fig. 11, the target cluster merging threshold value determining module 20 includes: a third cluster merging threshold value acquiring submodule 27, a front-face pose information determining submodule 28, and a third target cluster merging threshold value submodule 29.

The third cluster merging threshold value acquiring submodule 27 is configured to acquire a preset cluster merging threshold value.

The front-face pose information determining submodule 28 is configured to determine whether the face pose information in the two images to be classified are pose information of front face.

The third target cluster merging threshold value submodule 29 is configured to, when the face pose information in the two images to be classified are the pose information of front face, use the preset cluster merging threshold value as the target cluster merging threshold value.

If the face pose information in the two images to be classified are the pose information of front face, it indicates that the two images to be classified contain all the face features, and at this time, the preset cluster merging threshold value may be directly used as the target cluster merging threshold value.

In another embodiment provided by the present disclosure, based on Fig. 7, as shown in Fig. 12, the image classification module 30 includes: a cluster merging value calculating submodule 31, a cluster merging value determining submodule 32, a same-type image determining submodule 33, and a different-type image determining submodule 34.

The cluster merging value calculating submodule 31 is configured to calculate a cluster merging value of the two images to be classified.

The cluster merging value determining submodule 32 is configured to determine whether the cluster merging value is greater than the target cluster merging threshold value.

The same-type image determining submodule 33 is configured to, when the cluster merging value is greater than the target cluster merging threshold value, determine the two images to be classified as images of the same type.

The different-type image determining submodule 34 is configured to, when the cluster merging value is not greater than the target cluster merging threshold value, determine the two images to be classified as images of different types.

By comparing the cluster merging value of the two images to be classified with the target cluster merging threshold value, it is possible to conveniently and accurately determine whether the two images to be classified belong to the same type of images.

In the image classification device provided by certain embodiments of the present disclosure, when classifying two images to be classified having a relatively high similarity, the face pose information of the two images to be classified is obtained, and then the pose information of the two images to be classified having a relatively high similarity is determined, so as to determine the cluster merging threshold value corresponding to the pose information of the two images to be classified. When the similarity of the two images to be classified is greater than the cluster merging threshold value, the two images to be classified are classified into one type. In this way, the problem of high error rate of image classification, which is due to directly determining whether the two images to be classified belong to the same type of images only by the similarity in the images, could be efficiently avoided.

In addition, when the face pose information in the two images to be classified are different, the cluster merging threshold values corresponding to the pose information of the two images to be classified are variable. If the pose information of the two images to be classified are relatively close, for example, both of them are wide angle poses, the cluster merging threshold value may be adjusted to be higher. If the pose information of the two images to be classified are quite different, for example, one of them is left side face pose information, and the other is right side face pose information, the cluster merging threshold value therebetween may be adjusted to be lower. If both the pose information of the two images to be classified belong to the front face pose information, the cluster merging threshold value therebetween may not be adjusted. That is, the cluster merging threshold values corresonding to the pose information of the two images to be classified may be self-adpative, and it is possible to accurately determine whether the two images to be classified are photo images of a same person.

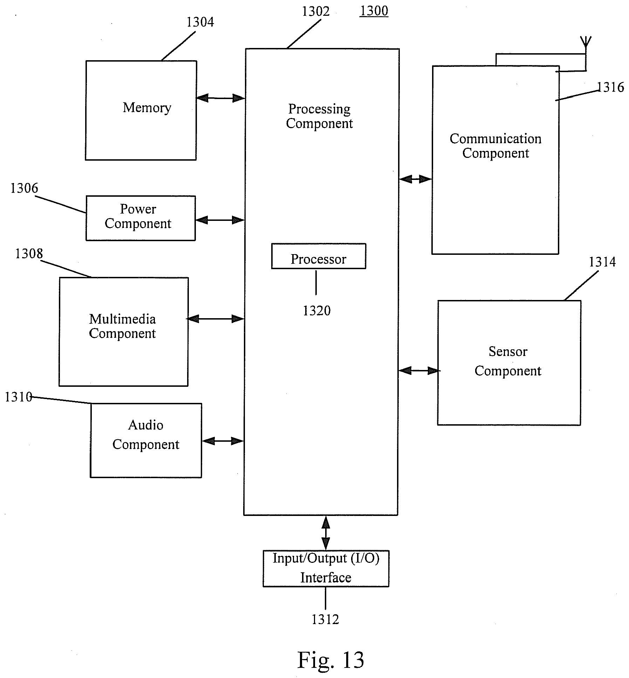

Fig. 13 is a block diagram of an image classification device 1300, according to an example embodiment. For example, the device 1300 may be a mobile phone, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In certain example embodiments, there is also provided a non-transitory computer-readable storage medium including instructions, such as the memory 1304 including instructions, the above instructions are executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, enables the mobile terminal to perform an image classification method, the method including:
when acquiring two images to be classified containing face feature information, determining face pose information in the two images to be classified respectively according to a pre-established face pose classifier model;
determining a target cluster merging threshold value between the two images to be classified according to the face pose information in the two images to be classified; and
classifying the two images to be classified by using the determined target cluster merging threshold value.

## Claims

1. An image classification method, comprising:
when acquiring two images to be classified containing face feature information, determining (S110) face pose information in the two images to be classified respectively, according to a pre-established face pose classifier model;
determining (S120) a target cluster merging threshold value between the two images to be classified according to the face pose information in the two images to be classified; and
classifying (S130) the two images to be classified by using the determined target cluster merging threshold value.

2. The method of claim 1, further comprising:
calculating (S140) a similarity between the two images to be classified;
determining (S150) whether the similarity is greater than a preset threshold value; and
when the similarity is greater than the preset threshold value, performing the step of determining (S110) the face pose information in the two images to be classified respectively.

3. The method of claim 1 or 2, wherein the determining (S120) of the target cluster merging threshold value between the two images to be classified comprises:
acquiring (S121) a preset cluster merging threshold value;
determining (S122) whether the face pose information in the two images to be classified are both pose information of wide-angle; and
when the face pose information in the two images to be classified are both the pose information of wide-angle, increasing (S123) the preset cluster merging threshold value according to a preset manner, and using the increased preset cluster merging threshold value as the target cluster merging threshold value.

4. The method of claim 1 or 2, wherein the determining (S120) of the target cluster merging threshold value between the two images to be classified comprises:
acquiring (S124) a preset cluster merging threshold value;
determining (S125) whether the face pose information in the two images to be classified are pose information of different angles respectively; and
when the face pose information in the two images to be classified are the pose information of different angles respectively, decreasing (S126) the preset cluster merging threshold value according to a preset manner, and using the decreased preset cluster merging threshold value as the target cluster merging threshold value.

5. The method of claim 1 or 2, wherein the determining (S120) of the target cluster merging threshold value between the two images to be classified comprises:
acquiring (S127) a preset cluster merging threshold value;
determining (S128) whether the face pose information in the two images to be classified are pose information of front face; and
when the face pose information in the two images to be classified are the pose information of front face, using (S129) the preset cluster merging threshold value as the target cluster merging threshold value.

6. The method of claim 1, wherein the classifying (S130) of the two images to be classified by using the determined target cluster merging threshold value comprises:
calculating (S131) a cluster merging value of the two images to be classified;
determining (S132) whether the cluster merging value is greater than the target cluster merging threshold value;
when the cluster merging value is greater than the target cluster merging threshold value, determining (S133) the two images to be classified as images of the same type; and
when the cluster merging value is not greater than the target cluster merging threshold value, determining (S134) the two images to be classified as images of different types.

7. An image classification device, comprising:
a face pose information determining module (10) configured to, when acquiring two images to be classified containing face feature information, determine face pose information in the two images to be classified respectively according to a pre-established face pose classifier model;
a target cluster merging threshold value determining module (20) configured to determine a target cluster merging threshold value between the two images to be classified according to the face pose information in the two images to be classified; and
an image classification module (30) configured to classify the two images to be classified by using the determined target cluster merging threshold value.

8. The device of claim 7, further comprising:
a similarity calculating module (40) configured to calculate a similarity between the two images to be classified; and
a threshold value determining module (50) configured to determine whether the similarity is greater than a preset threshold value.

9. The device of claim 7 or 8, wherein the target cluster merging threshold value determining module (20) comprises:
a first cluster merging threshold value acquiring submodule (21) configured to acquire a preset cluster merging threshold value;
a wide-angle pose information determining submodule (22) configured to determine whether the face pose information in the two images to be classified are both pose information of wide-angle; and
a first target cluster merging threshold value submodule (23) configured to, when the face pose information in the two images to be classified are both the pose information of wide-angle, increase the preset cluster merging threshold value according to a preset manner, and use the increased preset cluster merging threshold value as the target cluster merging threshold value.

10. The device of claim 7 or 8, wherein the target cluster merging threshold value determining module (20) comprises:
a second cluster merging threshold value acquiring submodule (24) configured to acquire a preset cluster merging threshold value;
a different-angle pose information determining submodule (25) configured to determine whether the face pose information in the two images to be classified are pose information of different angles respectively; and
a second target cluster merging threshold value submodule (26) configured to, when the face pose information in the two images to be classified are the pose information of different angles respectively, decrease the preset cluster merging threshold value according to a preset manner, and use the decreased preset cluster merging threshold value as the target cluster merging threshold value.

11. The device of claim 7 or 8, wherein the target cluster merging threshold value determining module (20) comprises:
a third cluster merging threshold value acquiring submodule (27) configured to acquire a preset cluster merging threshold value;
a front-face pose information determining submodule (28) configured to determine whether the face pose information in the two images to be classified are pose information of front face; and
a third target cluster merging threshold value submodule (29) configured to, when the face pose information in the two images to be classified are the pose information of front face, use the preset cluster merging threshold value as the target cluster merging threshold value.

12. The device of claim 7, wherein the image classification module (30) comprises:
a cluster merging value calculating submodule (31) configured to calculate a cluster merging value of the two images to be classified;
a cluster merging value determining submodule (32) configured to determine whether the cluster merging value is greater than the target cluster merging threshold value;
a same-type image determining submodule (33) configured to, when the cluster merging value is greater than the target cluster merging threshold value, determine the two images to be classified as images of the same type; and
a different-type image determining submodule (34) configured to, when the cluster merging value is not greater than the target cluster merging threshold value, determine the two images to be classified as images of different types.

13. A terminal, comprising:
a processor (1320); and
a memory (1304) for storing instructions executable by the processor (1320);
wherein the processor (1320) is configured to:
when acquiring two images to be classified containing face feature information, determine (S110) face pose information in the two images to be classified respectively according to a pre-established face pose classifier model;
determine (S120) a target cluster merging threshold value between the two images to be classified according to the face pose information in the two images to be classified; and
classify (S130) the two images to be classified by using the determined target cluster merging threshold value.

14. A computer program, which when executing on a processor of terminal, performs a method according to any one of claims 1 to 6.
